(19) Europäisches Patentamt
European Patent Office
Office européen des brevets

(11) **EP 3 565 379 B1**

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **19168843.1**

(22) Anmeldetag: **12.04.2019**

(51) Internationale Patentklassifikation (IPC):
**H05B 6/12** *(2006.01)*   **H05B 6/06** *(2006.01)*

(52) Gemeinsame Patentklassifikation (CPC):
**H05B 6/065; H05B 6/1272;** Y02B 40/00

(54) **INDUKTIONSVORRICHTUNG**

INDUCTION DEVICE

DISPOSITIF D'INDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2018 ES 201830433**

(43) Veröffentlichungstag der Anmeldung:
**06.11.2019 Patentblatt 2019/45**

(73) Patentinhaber: **BSH Hausgeräte GmbH**
**81739 München (DE)**

(72) Erfinder:
• **Acero Acero, Jesus**
**50002 Zaragoza (ES)**
• **Carretero Chamarro, Claudio**
**50003 Zaragoza (ES)**
• **Hernandez Blasco, Pablo Jesus**
**50019 Zaragoza (ES)**
• **Llorente Gil, Sergio**
**50009 Zaragoza (ES)**
• **Lope Moratilla, Ignacio**
**50010 Zaragoza (ES)**
• **Serrano Trullen, Javier**
**50017 Zaragoza (ES)**

(56) Entgegenhaltungen:
EP-A1- 0 971 562     EP-A1- 2 731 403
WO-A1-2008/122495   DE-A1-102008 042 512
US-A1- 2015 236 513  US-A1- 2015 332 845

**Beschreibung**

Die Erfindung betrifft eine Induktionsvorrichtung nach dem Oberbegriff des Anspruchs 1 und ein Verfahren zu einem Betrieb einer Induktionsvorrichtung nach dem Oberbegriff des Anspruchs 11

Aus der internationalen Patentanmeldung WO 2017/109609 A1 ist bereits eine Induktionsvorrichtung bekannt, welche ein erstes Induktionselement und ein zweites Induktionselement aufweist, das in einem Nahbereich des ersten Induktionselements angeordnet ist. Die Induktionselemente sind teilweise überlappend angeordnet. Eine Steuereinheit betreibt überlappend angeordnete Induktionselemente in einem Betriebszustand zeitgleich. Hierbei betreibt die Steuereinheit das erste Induktionselement mittels einer ersten Frequenzeinheit und das zweite Induktionselement mittels einer zweiten Frequenzeinheit. In dem Betriebszustand können aufgrund der überlappenden Anordnung der Induktionselemente Kopplungen zwischen den Induktionselementen auftreten. Hierdurch kann eines der Induktionselemente beispielsweise eine andere Energie übertragen als ein weiteres der Induktionselemente, und zwar obwohl die Induktionselemente mit der gleichen Frequenz betrieben werden.

EP 2 731 403 A1 (MITSUBISHI ELECTRIC CORP [JP]; MITSUBISHI ELECTRIC HOME APPL [JP]) 14. Mai 2014 (2014-05-14) offenbart, ein Verhältnis eines Stroms durch Induktionselemente von einer eingestellten Gesamtheizleistung bzw. einem eingestellten Garprozess abhängig zu machen.

Die Aufgabe der Erfindung besteht insbesondere darin, eine gattungsgemäße Vorrichtung mit verbesserten Eigenschaften hinsichtlich einer Energieübertragung bereitzustellen. Die Aufgabe wird erfindungsgemäß durch die Merkmale der Ansprüche 1 und 11 gelöst, während vorteilhafte Ausgestaltungen und Weiterbildungen der Erfindung den Unteransprüchen entnommen werden können.

Die Erfindung geht aus von Induktionsvorrichtung, insbesondere Induktionsgargerätevorrichtung und vorteilhaft Induktionskochfeldvorrichtung, mit zumindest einem ersten Induktionselement, mit zumindest einem zweiten Induktionselement, welches in einem Nahbereich des ersten Induktionselements angeordnet ist und welches insbesondere in wenigstens einem Betriebszustand mit dem ersten Induktionselement koppelt, und mit zumindest einer Steuereinheit, welche die Induktionselemente in wenigstens einem Betriebszustand zeitgleich insbesondere mit einer Periodendauer betreibt.

Es wird vorgeschlagen, dass die Steuereinheit in dem Betriebszustand ein Verhältnis eines Stroms durch das erste Induktionselement und eines Stroms durch das zweite Induktionselement insbesondere zu zumindest einem Zeitpunkt der Periodendauer und vorteilhaft zu jedem Zeitpunkt der Periodendauer wenigstens im Wesentlichen auf einen voreingestellten Stromverhältniswert regelt.

Durch die erfindungsgemäße Ausgestaltung kann insbesondere eine optimierte Energieübertragung erreicht werden, bei welcher insbesondere ein Einfluss einer Kopplung der Induktionselemente minimiert und/oder kalkulierbar gemacht werden kann. Insbesondere kann eine optimale Verteilung der Energie, beispielsweise im Fall einer induktiven Beheizung eine optimale Wärmeverteilung in einem Gargeschirrboden, erzielt werden. Es können insbesondere Hotspots und/oder Coldspots vermieden werden. Insbesondere kann eine hohe Flexibilität hinsichtlich einer Anwendbarkeit erzielt werden, weshalb beispielsweise im Fall einer induktiven Beheizung von Gargeschirr eine Vielzahl an verschiedenen Gargeschirren beheizt werden kann, und zwar insbesondere unabhängig von einem Material des Gargeschirrs und/oder von einer Position des Gargeschirrs und/oder von einer Größe des Gargeschirrs. Es kann insbesondere eine kontinuierliche Energieübertragung, insbesondere in Form einer Beheizung, bereitgestellt werden, wodurch insbesondere Flicker vermieden und/oder eine optimierte und/oder gleichmäßige Energieübertragung, insbesondere Beheizung, erzielt werden kann.

Unter einer "Induktionsvorrichtung", insbesondere unter einer "Induktionsgargerätevorrichtung" und vorteilhaft unter einer "Induktionskochfeldvorrichtung", soll insbesondere zumindest ein Teil, insbesondere eine Unterbaugruppe, eines Induktionsgeräts, insbesondere eines Induktionsgargeräts und vorteilhaft eines Induktionskochfelds, verstanden werden. Das die Induktionsvorrichtung aufweisende Induktionsgerät könnte beispielsweise einer Energieübertragungsgerät sein, welches insbesondere zu einer Energieübertragung an zumindest eine weitere Einheit, insbesondere zumindest eine Sekundärspule eines Verbrauchers, vorgesehen sein könnte. Vorteilhaft ist das die Induktionsvorrichtung aufweisende Induktionsgerät ein Induktionsgargerät. Das die Induktionsvorrichtung aufweisende Induktionsgerät und insbesondere das Induktionsgargerät könnte beispielsweise ein Induktionsbackofen sein. Vorzugsweise ist das die Induktionsvorrichtung aufweisende Induktionsgerät und insbesondere das Induktionsgargerät ein Induktionskochfeld.

Unter einem "Induktionselement" soll insbesondere ein Element verstanden werden, welches in wenigstens einem Betriebszustand Energie insbesondere zum Zweck einer induktiven Energieübertragung bereitstellt. Das Induktionselement könnte insbesondere eine Primärspule ausbilden, welche insbesondere zu einer induktiven Energieübertragung an zumindest eine Sekundärspule vorgesehen sein könnte. Die Sekundärspule könnte beispielsweise Teil eines Energieübertragungssystems sein, welches insbesondere die Induktionsvorrichtung aufweisen könnte. Insbesondere könnte die Sekundärspule in zumindest einem Verbraucher wenigstens zu einem Großteil integriert sein. Der Verbraucher könnte beispielsweise eine Handwerkzeugmaschine und/oder ein Auto und/oder ein Laptop und/oder ein Tablet und/oder ein Mobiltelefon sein. Alternativ oder zusätzlich könnte das Induktionselement insbesondere als ein Induktionsheizelement ausgebildet sein und insbesondere zu einer Energieübertragung an zumindest ein Gargeschirr insbesondere zum Zweck einer Erhitzung des Gargeschirrs vorgesehen sein. Das Induktionselement könnte in wenigstens einem Betriebszustand insbesondere ein Wechselfeld, insbesondere ein elektromagnetisches Wechselfeld, mit einer Frequenz von mindestens 1 Hz, insbesondere von mindestens 2 Hz, vorteilhaft von mindestens 5 Hz und vorzugsweise von mindestens 10 Hz bereitstellen. Insbesondere könnte das Induktionselement in wenigstens einem Betriebszustand insbesondere ein Wechselfeld, insbesondere ein elektromagnetisches Wechselfeld, mit einer Frequenz von maximal 150 kHz, insbesondere von maximal 120 kHz, vorteilhaft von maximal 100 kHz und vorzugsweise von maximal 80 kHz bereitstellen. Ein insbesondere als Induktionsheizelement ausgebildetes Induktionselement könnte in wenigstens einem Betriebszustand insbesondere ein hochfrequentes Wechselfeld, insbesondere ein hochfrequentes elektromagnetisches Wechselfeld, mit einer Frequenz von mindestens 15 kHz und insbesondere von maximal 100 kHz bereitstellen.

Die Induktionsvorrichtung könnte beispielsweise ausschließlich das erste Induktionselement und das zweite Induktionselement aufweisen. Vorteilhaft weist die Induktionsvorrichtung, insbesondere insgesamt, zumindest drei, vorteilhaft zumindest vier, besonders vorteilhaft zumindest fünf und vorzugsweise mehrere Induktionselemente auf. Insbesondere könnte ein insbesondere beliebiges der Induktionselemente in einem Nahbereich zu zumindest einem weiteren der Induktionselemente angeordnet sein. Zumindest ein Teil der Induktionselemente könnte beispielsweise in einer Reihe und/oder in Form einer Matrix angeordnet sein. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Unter der Wendung, dass ein erstes Objekt in einem "Nahbereich" eines zweiten Objekts angeordnet ist, soll insbesondere verstanden werden, dass bei einer senkrechten Betrachtung auf eine Haupterstreckungsebene des ersten Objekts und/oder des zweiten Objekts ein Abstand einer seitlichen Begrenzung des ersten Objekts zu einer nächstgelegenen seitlichen Begrenzung des zweiten Objekts maximal 60 %, insbesondere maximal 50 %, vorteilhaft maximal 40 %, besonders vorteilhaft maximal 30%, vorzugsweise maximal 20% und besonders bevorzugt maximal 10% einer Längserstreckung des ersten Objekts und/oder des zweiten Objekts beträgt. Alternativ oder zusätzlich soll unter der Wendung, dass ein erstes Objekt in einem "Nahbereich" eines zweiten Objekts angeordnet ist, insbesondere verstanden werden, dass bei einer senkrechten Betrachtung auf eine Haupterstreckungsebene des ersten Objekts und/oder des zweiten Objekts ein Abstand eines Mittelpunkts und/oder Schwerpunkts des ersten Objekts zu einem nächstgelegenen Mittelpunkt und/oder Schwerpunkt des zweiten Objekts maximal 150%, insbesondere maximal 120%, vorteilhaft maximal 100%, besonders vorteilhaft maximal 80 %, vorzugsweise maximal 60 % und besonders bevorzugt maximal 50 % einer Längserstreckung des ersten Objekts und/oder des zweiten Objekts beträgt.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Unter einer "Längserstreckung" eines Objekts soll insbesondere Erstreckung des Objekts entlang einer Längserstreckungsrichtung des Objekts verstanden werden. Unter einer "Längserstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt. Unter einer "Erstreckung" eines Objekts soll insbesondere ein maximaler Abstand zweier Punkte einer senkrechten Projektion des Objekts auf eine Ebene verstanden werden.

Unter einer "Steuereinheit" soll insbesondere eine elektronische Einheit verstanden werden, die vorzugsweise in einer Steuer- und/oder Regeleinheit eines Induktionsgeräts zumindest teilweise integriert ist und die vorzugsweise dazu vorgesehen ist, zumindest die Induktionselemente und/oder zumindest eine Frequenzeinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden.

In dem Betriebszustand vermeidet die Steuereinheit insbesondere ein Betreiben der Induktionselemente in einem Multiplex-Verfahren und/oder ein abwechselndes Betreiben der Induktionselemente. Die Steuereinheit vermeidet in dem Betriebszustand insbesondere ein Abschalten zumindest eines der Induktionselemente insbesondere in der Periodendauer. Insbesondere aktiviert und/oder betreibt die Steuereinheit die Induktionselemente durchgehend und/oder pausenlos und/oder ununterbrochen. Unter einem "Betriebszustand" soll insbesondere ein Zustand verstanden werden, in welchem die Steuereinheit die Induktionselemente mit Energie versorgt und insbesondere zu einer Versorgung der Induktionselemente zumindest eine Frequenzeinheit, vorteilhaft zumindest eine Frequenzeinheit pro Induktionselement, ansteuert. Die Induktionsvorrichtung weist insbesondere zumindest eine Frequenzeinheit, insbesondere pro Induktionselement, auf, welche zu einer Energieversorgung von zumindest einem der Induktionselemente, insbesondere von genau einem der Induktionselemente, vorgesehen ist.

Unter einer "Frequenzeinheit" soll insbesondere eine Einheit verstanden werden, welche in wenigstens einem Betriebszustand insbesondere zum Zweck einer Energieversorgung zumindest eines der Induktionselemente, vorteilhaft genau eines der Induktionselemente, zumindest einen Wechselstrom bereitstellt. Vorteilhaft ist die Frequenzeinheit als Heizfrequenzeinheit ausgebildet und stellt insbesondere in dem Betriebszustand einen hochfrequenten Wechselstrom zu einer Energieversorgung zumindest eines der Induktionselemente bereit. Insbesondere könnte die Frequenzeinheit zumindest ein Schaltelement, insbesondere zumindest ein Halbleitungsschaltelement, und/oder vorteilhaft zumindest einen Wechselrichter und/oder Inverter aufweisen.

Unter einem "voreingestellten" Wert soll insbesondere ein Wert verstanden werden, welcher insbesondere zeitlich gesehen vor einem Beginn eines Betriebs der Induktionselemente festgelegt und/oder definiert ist. Beispielsweise könnte die Steuereinheit den voreingestellten Wert insbesondere vor einem Beginn eines Betriebs der Induktionselemente festlegen und/oder ermitteln. Die Steuereinheit könnte den voreingestellten Wert beispielsweise in Abhängigkeit von zumindest einem Geometriefaktor und/oder in Abhängigkeit von zumindest einem Strukturfaktor festlegen und/oder ermitteln. Alternativ oder zusätzlich könnte die Steuereinheit insbesondere zumindest eine Speichereinheit aufweisen, in welcher insbesondere der voreingestellte Wert, insbesondere von Werk ab und/oder dauerhaft und/oder unveränderbar, gespeichert sein könnte.

Unter der Wendung, dass die Steuereinheit ein Verhältnis und/oder eine Phasenverschiebung und/oder eine Gesamtleistung "wenigstens im Wesentlichen" auf einen voreingestellten Wert regelt, soll insbesondere verstanden werden, dass die Steuereinheit das Verhältnis und/oder die Phasenverschiebung und/oder die Gesamtleistung auf einen Wert regelt, welcher mindestens 50 %, insbesondere mindestens 60 %, vorteilhaft mindestens 70 %, besonders vorteilhaft mindestens 80 %, vorzugsweise mindestens 90 % und besonders bevorzugt mindestens 95 % des voreingestellten Werts beträgt und/oder welcher maximal 150 %, insbesondere maximal 140%, vorteilhaft maximal 130%, besonders vorteilhaft maximal 120%, vorzugsweise maximal 110% und besonders bevorzugt maximal 105% des voreingestellten Werts beträgt.

Unter der Wendung, dass die Steuereinheit ein Verhältnis und/oder eine Phasenverschiebung und/oder eine Gesamtleistung wenigstens im Wesentlichen auf einen voreingestellten Wert "regelt", soll insbesondere verstanden werden, dass die Steuereinheit das Verhältnis und/oder die Phasenverschiebung und/oder die Gesamtleistung durch Anpassung und/oder durch Änderung zumindest einer Betriebskenngröße, insbesondere zumindest einer Betriebskenngröße zumindest einer Frequenzeinheit, vorzugsweise iterativ, wenigstens im Wesentlichen auf den voreingestellten Wert einstellt und/oder wenigstens im Wesentlichen an den voreingestellten Wert anpasst.

Die Induktionsvorrichtung weist insbesondere zumindest eine Detektionseinheit auf, welche insbesondere zu einer Detektion zumindest einer elektrischen Kenngröße vorgesehen ist. Die elektrische Kenngröße könnte beispielsweise ein aktueller Stromverhältniswert und/oder ein aktueller Phasenverschiebungswert und/oder ein aktueller Solleistungswert sein.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass der voreingestellte Stromverhältniswert in dem Betriebszustand von zumindest einem Strukturfaktor abhängig ist. Unter einem "Strukturfaktor" soll insbesondere ein Faktor verstanden werden, welcher eine Situation einer Energieübertragung kennzeichnet. Beispielsweise könnte der Strukturfaktor eine Anordnung der Induktionselemente relativ zueinander und/oder eine Anordnung zumindest eines der Induktionselemente relativ zu zumindest einem Verbraucher und/oder eine Anordnung zumindest eines der Induktionselemente relativ zu zumindest einem Abschirmelement und/oder zumindest eine Eigenschaft von zumindest einem Verbraucher und/oder zumindest eine Eigenschaft zumindest eines der Induktionselemente aufweisen. Die Eigenschaft des Verbrauchers könnte beispielsweise ein Material des Verbrauchers und/oder eine Geometrie des Verbrauchers und/oder eine Größe des Verbrauchers sein. Die Eigenschaft zumindest eines der Induktionselemente könnte beispielsweise ein Material des Induktionselements und/oder eine Geometrie des Induktionselements und/oder eine Größe des Induktionselements und/oder ein dem Induktionselement zugeordnetes Ferritelement und/oder eine Windungszahl des Induktionselements sein. Dadurch kann insbesondere eine optimierte Energieübertragung erzielt werden, da insbesondere der voreingestellte Stromverhältniswert in Abhängigkeit des Strukturfaktors für eine insbesondere beliebige Situation insbesondere flexibel gewählt und/oder festgelegt werden kann.

Zudem wird vorgeschlagen, dass der voreingestellte Stromverhältniswert durch ein Verhältnis einer Windungszahl des zweiten Induktionselements und einer Windungszahl des ersten Induktionselements definiert ist. Insbesondere weist der Strukturfaktor ein Verhältnis einer Windungszahl des zweiten Induktionselements und einer Windungszahl des ersten Induktionselements auf und könnte beispielsweise als ein Verhältnis einer Windungszahl des zweiten Induktionselements und einer Windungszahl des ersten Induktionselements ausgebildet sein. Dadurch kann insbesondere eine Geometrie der Induktionselemente bei einer Energieübertragung und/oder bei einer Festlegung des Stromverhältniswerts berücksichtigt werden, wodurch insbesondere eine hohe Flexibilität ermöglicht und/oder Energie in optimierter Art und Weise übertragen werden kann, und zwar insbesondere unter Vermeidung von Hotspots und/oder Coldspots.

Beispielsweise könnte der voreingestellte Stromverhältniswert mindestens 0,6, insbesondere mindestens 0,65, vorteilhaft mindestens 0,7, besonders vorteilhaft mindestens 0,75 und vorzugsweise mindestens 0,8 betragen. Alternativ oder zusätzlich könnte der voreingestellte Stromverhältniswert maximal 1,5, insbesondere maximal 1,4, vorteilhaft maximal 1,3, besonders vorteilhaft maximal 1,25 und vorzugsweise maximal 1,2 betragen. Vorzugsweise beträgt der voreingestellte Stromverhältniswert wenigstens im Wesentlichen eins, und zwar insbesondere im Fall, dass die Induktionselemente wenigstens im Wesentlichen identisch ausgebildet sind und insbesondere bei einer senkrechten Betrachtung auf eine Haupterstreckungsebene des ersten Induktionselements und/oder des zweiten Induktionselements wenigstens abschnittsweise überlappend angeordnet sind. Unter "wenigstens im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht. Insbesondere beträgt der voreingestellte Stromverhältniswert mindestens 0,9, insbesondere mindestens 0,92, vorteilhaft mindestens 0,94, besonders vorteilhaft mindestens 0,95, vorzugsweise mindestens 0,97 und besonders bevorzugt mindestens 0,99. Insbesondere beträgt der voreingestellte Stromverhältniswert maximal 1,1, insbesondere maximal 1,08, vorteilhaft maximal 1,06, besonders vorteilhaft maximal 1,05, vorzugsweise maximal 1,03 und besonders bevorzugt maximal 1,01. Dadurch kann insbesondere eine gleichmäßige und/oder optimierte Energieübertragung gewährleistet werden.

Ferner wird vorgeschlagen, dass die Steuereinheit in dem Betriebszustand eine Phasenverschiebung des Stroms durch das erste Induktionselement und des Stroms durch das zweite Induktionselement insbesondere zu zumindest einem Zeitpunkt der Periodendauer und vorteilhaft zu jedem Zeitpunkt der Periodendauer wenigstens im Wesentlichen auf einen voreingestellten Phasenverschiebungswert regelt. Dadurch kann insbesondere ein Auftreten von Hotspots und/oder Coldspots vermieden werden. Insbesondere kann, insbesondere im Fall einer Beheizung eines Gargeschirrs, eine optimierte und/oder gleichmäßige Wärmeverteilung in einem Gargeschirrboden erzielt werden.

Der voreingestellte Phasenverschiebungswert könnte beispielsweise von zumindest einem Geometriefaktor und/oder von zumindest einem Strukturfaktor abhängig sein. Vorzugsweise ist der voreingestellte Phasenverschiebungswert von einer Anordnung des ersten Induktionselements relativ zu dem zweiten Induktionselement abhängig. Insbesondere unterscheidet sich der Phasenverschiebungswert im Fall von zwei Induktionselementen, welche bei einer senkrechten Betrachtung auf eine Haupterstreckungsebene des ersten Induktionselements und/oder des zweiten Induktionselements wenigstens abschnittsweise überlappend angeordnet sind, von einem Phasenverschiebungswert im Fall von zwei Induktionselementen, welche bei einer senkrechten Betrachtung auf eine Haupterstreckungsebene des ersten Induktionselements und/oder des zweiten Induktionselements überlappungsfrei und insbesondere benachbart zueinander angeordnet sind. Vorzugsweise beträgt der voreingestellte Phasenverschiebungswert wenigstens im Wesentlichen 60°, und zwar insbesondere im Fall, dass die Induktionselemente wenigstens im Wesentlichen identisch ausgebildet sind und insbesondere bei einer senkrechten Betrachtung auf eine Haupterstreckungsebene des ersten Induktionselements und/oder des zweiten Induktionselements wenigstens abschnittsweise überlappend angeordnet sind. Insbesondere beträgt der voreingestellte Phasenverschiebungswert mindestens 30°, insbesondere mindestens 35°, vorteilhaft mindestens 40°, besonders vorteilhaft mindestens 45°, vorzugsweise mindestens 50° und besonders bevorzugt mindestens 55°. Insbesondere beträgt der voreingestellte Phasenverschiebungswert maximal 90°, insbesondere maximal 85°, vorteilhaft maximal 80°, besonders vorteilhaft maximal 75°, vorzugsweise maximal 70° und besonders bevorzugt maximal 65°. Insbesondere im Fall, dass die Induktionselemente wenigstens im Wesentlichen identisch ausgebildet sind und insbesondere bei einer senkrechten Betrachtung auf eine Haupterstreckungsebene des ersten Induktionselements und/oder des zweiten Induktionselements überlappungsfrei und insbesondere benachbart zueinander angeordnet sind, beträgt der Phasenverschiebungswert insbesondere wenigstens im Wesentlichen 0° und/oder wenigstens im Wesentlichen 180°. Dadurch kann insbesondere für jede beliebige Anordnung des ersten Induktionselements relativ zu dem zweiten Induktionselement eine Energieübertragung optimiert werden, wodurch insbesondere ein hoher Bedienkomfort und/oder eine verlustarme Energieübertragung gewährleistet werden kann.

Weiterhin wird vorgeschlagen, dass die Induktionsvorrichtung zumindest eine erste Frequenzeinheit, welche zu einer Energieversorgung des ersten Induktionselements vorgesehen ist, und zumindest eine zweite Frequenzeinheit aufweist, welche zu einer Energieversorgung des zweiten Induktionselements vorgesehen ist. Insbesondere versorgt die erste Frequenzeinheit in wenigstens einem insbesondere beliebigen Betriebszustand das erste Induktionselement mit Energie. Insbesondere im Fall einer Aktivierung des ersten Induktionselements, empfängt das erste Induktionselement insbesondere ausschließlich von der ersten Frequenzeinheit Energie. Insbesondere versorgt die zweite Frequenzeinheit in wenigstens einem insbesondere beliebigen Betriebszustand das zweite Induktionselement mit Energie.

Insbesondere im Fall einer Aktivierung des zweiten Induktionselements, empfängt das zweite Induktionselement insbesondere ausschließlich von der zweiten Frequenzeinheit Energie. Beispielsweise könnten das erste Induktionselement und das zweite Induktionselement in einer Vollbrückenschaltung angeordnet sein. Vorzugsweise sind das erste Induktionselement und das zweite Induktionselement in einer Halbbrückenschaltung angeordnet. Dadurch können die Induktionselemente insbesondere besonders effektiv und/oder effizient mit Energie versorgt werden, wodurch eine Energieübertragung insbesondere optimiert und/oder genau dosiert werden kann.

Ferner wird vorgeschlagen, dass die Steuereinheit in dem Betriebszustand zu der Regelung, insbesondere des Verhältnisses auf den Stromverhältniswert und/oder der Phasenverschiebung auf den Phasenverschiebungswert, zumindest eine Betriebskenngröße zumindest einer der Frequenzeinheiten anpasst und insbesondere bei Bedarf ändert. Unter einer "Betriebskenngröße" einer Frequenzeinheit soll insbesondere eine Kenngröße verstanden werden, welche einen Betrieb der Frequenzeinheit kennzeichnet. Die Betriebskenngröße könnte beispielsweise eine Frequenz der Frequenzeinheit und/oder ein Tastgrad der Frequenzeinheit aufweisen. Alternativ oder zusätzlich könnte die Betriebskenngröße eine Spannungsphasenverschiebung der Frequenzeinheiten aufweisen. Dadurch kann insbesondere auf einfache und/oder unkomplizierte Art und Weise eine genaue und/oder präzise Regelung ermöglicht werden.

In wenigstens einem Betriebszustand könnte die Steuereinheit das erste Induktionselement und das zweite Induktionselement insbesondere mit voneinander verschiedenen Frequenzen betreiben, welche sich beispielsweise um mindestens 15 kHz, insbesondere um mindestens 16 kHz, vorteilhaft um mindestens 17 kHz, besonders vorteilhaft um mindestens 18 kHz, vorzugsweise um mindestens 19 kHz und besonders bevorzugt um mindestens 20 kHz unterscheiden könnten. Vorzugsweise betreibt die Steuereinheit in dem Betriebszustand das erste Induktionselement und das zweite Induktionselement mit wenigstens im Wesentlichen der gleichen Frequenz. Dadurch kann insbesondere ein Auftreten von Intermodulationsbrummen vermieden werden, wodurch insbesondere ein hoher Bedienkomfort erzielt werden kann.

Vorzugsweise wird vorgeschlagen, dass die Steuereinheit in dem Betriebszustand eine Gesamtleistung der Frequenzeinheiten wenigstens im Wesentlichen auf einen voreingestellten Sollleistungswert regelt. Der Sollleistungswert könnte beispielsweise durch zumindest eine Bedienereingabe mittels zumindest einer Bedienerschnittstelle, insbesondere der Induktionsvorrichtung, vorgegeben sein. Alternativ oder zusätzlich könnte der Sollleistungswert durch zumindest ein automatisches Energieübertragungsprogramm, insbesondere durch zumindest ein automatisches Garprogramm, welches insbesondere in einer Speichereinheit der Steuereinheit gespeichert sein könnte, vorgegeben sein. Dadurch kann insbesondere ein hoher Bedienkomfort erzielt werden, und zwar insbesondere aufgrund einer optimal und/oder präzise einstellbaren Energieübertragung, insbesondere Beheizung.

Das erste Induktionselement und das zweite Induktionselement könnten beispielsweise direkt zueinander benachbart angeordnet und insbesondere Teil einer Matrixanordnung von Induktionselementen sein. Alternativ oder zusätzlich können das erste Induktionselement und das zweite Induktionselement beispielsweise konzentrisch relativ zueinander angeordnet und beispielsweise Teil einer Heizzone aus zumindest zwei, insbesondere aus zumindest drei und vorteilhaft aus zumindest vier konzentrisch angeordneten Induktionselementen sein. Dadurch kann insbesondere eine hohe Flexibilität aufgrund einer Vielzahl an möglichen Anordnungen der Induktionselemente relativ zueinander ermöglicht werden. Vorzugsweise sind das erste Induktionselement und das zweite Induktionselement bei einer senkrechten Betrachtung auf eine Haupterstreckungsebene des ersten Induktionselements und/oder des zweiten Induktionselements wenigstens abschnittsweise überlappend angeordnet. Unter der Wendung, dass das erste Induktionselement und das zweite Induktionselement bei einer senkrechten Betrachtung auf eine Haupterstreckungsebene des ersten Induktionselements und/oder des zweiten Induktionselements "wenigstens abschnittsweise" überlappend angeordnet sind, soll insbesondere verstanden werden, dass das erste Induktionselement zumindest einen Abschnitt aufweist, welcher bei einer senkrechten Betrachtung auf eine Haupterstreckungsebene des ersten Induktionselements und/oder des zweiten Induktionselements überlappend mit zumindest einem Abschnitt des zweiten Induktionselements angeordnet ist, wobei das erste Induktionselement zumindest einen weiteren, von dem Abschnitt verschiedenen Abschnitt aufweisen könnte, welcher bei einer senkrechten Betrachtung auf eine Haupterstreckungsebene des ersten Induktionselements und/oder des zweiten Induktionselements überlappungsfrei mit dem zweiten Induktionselements angeordnet sein könnte. Unter der Wendung, dass das erste Induktionselement und das zweite Induktionselement bei einer senkrechten Betrachtung auf eine Haupterstreckungsebene des ersten Induktionselements und/oder des zweiten Induktionselements "wenigstens abschnittsweise überlappend" angeordnet sind, soll insbesondere verstanden werden, dass bei einer senkrechten Betrachtung auf eine Haupterstreckungsebene des ersten Induktionselements und/oder des zweiten Induktionselements zumindest eine von dem ersten Induktionselement aufgespannte Fläche und zumindest eine von dem zweiten Induktionselement aufgespannte Fläche zumindest eine gemeinsame Schnittfläche aufweisen. Dadurch kann insbesondere eine kompakte Ausgestaltung erzielt werden.

Eine besonders vorteilhafte Energieübertragung und/oder eine besonders vorteilhafte Beheizung von Gargeschirr kann insbesondere erreicht werden durch ein Induktionsgerät, insbesondere durch ein Induktionsgargerät und vorteilhaft durch ein Induktionskochfeld, mit zumindest einer Induktionsvorrichtung, insbesondere mit zumindest einer Induktionsgargerätevorrichtung und vorteilhaft mit zumindest einer Induktionskochfeldvorrichtung.

Eine Energieübertragung und/oder eine Beheizung von Gargeschirr kann insbesondere weiter optimiert werden durch ein Verfahren zu einem Betrieb einer Induktionsvorrichtung mit zumindest einem ersten Induktionselement und mit zumindest einem zweiten Induktionselement, welches in einem Nahbereich des ersten Induktionselements angeordnet ist, wobei die Induktionselemente in wenigstens einem Betriebszustand zeitgleich betrieben werden, wobei in dem Betriebszustand ein Verhältnis eines Stroms durch das erste Induktionselement und eines Stroms durch das zweite Induktionselement wenigstens im Wesentlichen auf einen voreingestellten Stromverhältniswert geregelt wird.

Die Induktionsvorrichtung soll hierbei nicht auf die oben beschriebene Anwendung und Ausführungsform beschränkt sein. Insbesondere kann die Induktionsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 ein Induktionsgerät mit einer Induktionsvorrichtung in einer schematischen Draufsicht,

Fig. 2 ein erstes Induktionselement und ein zweites Induktionselement der Induktionsvorrichtung in einer schematischen Draufsicht,

Fig. 3 ein elektrisches Schaltbild der Induktionsvorrichtung in einer schematischen Darstellung,

Fig. 4 ein Diagramm, in welchem ein Verfahren zu einem Betrieb der Induktionsvorrichtung dargestellt ist, in einer schematischen Darstellung,

Fig. 5 ein Diagramm eines ersten Beispiels, in welchem eine Frequenz über einer Anzahl an Iterationen aufgetragen ist, in einer schematischen Darstellung,

Fig. 6 ein Diagramm des ersten Beispiels, in welchem ein Tastgrad über einer Anzahl an Iterationen aufgetragen ist, in einer schematischen Darstellung,

Fig. 7 ein Diagramm des ersten Beispiels, in welchem eine Leistung über einer Anzahl an Iterationen aufgetragen ist, in einer schematischen Darstellung,

Fig. 8 ein Diagramm des ersten Beispiels, in welchem eine Phasenverschiebung des Stroms durch das erste Induktionselement und des Stroms durch das zweite Induktionselement über einer Anzahl an Iterationen aufgetragen ist, in einer schematischen Darstellung,

Fig. 9 ein Diagramm des ersten Beispiels, in welchem eine Spannungsphasenverschiebung über einer Anzahl an Iterationen aufgetragen ist, in einer schematischen Darstellung,

Fig. 10 ein Diagramm des ersten Beispiels, in welchem ein Verhältnis eines Stroms durch das erste Induktionselement und eines Stroms durch das zweite Induktionselement über einer Anzahl an Iterationen aufgetragen ist, in einer schematischen Darstellung,

Fig. 11 ein Diagramm des ersten Beispiels, in welchem eine Stromstärke und eine Spannung über einer Zeit zu einem Beginn einer Regelung aufgetragen ist, in einer schematischen Darstellung,

Fig. 12 ein Diagramm des ersten Beispiels, in welchem eine Stromstärke und eine Spannung über einer Zeit zu einem Ende der Regelung aufgetragen ist, in einer schematischen Darstellung,

Fig. 13 ein Diagramm eines zweiten Beispiels, in welchem eine Frequenz über einer Anzahl an Iterationen aufgetragen ist, in einer schematischen Darstellung,

Fig. 14 ein Diagramm des zweiten Beispiels, in welchem ein Tastgrad über einer Anzahl an Iterationen aufgetragen ist, in einer schematischen Darstellung,

Fig. 15 ein Diagramm des zweiten Beispiels, in welchem eine Leistung über einer Anzahl an Iterationen aufgetragen ist, in einer schematischen Darstellung,

Fig. 16 ein Diagramm des zweiten Beispiels, in welchem eine Phasenverschiebung des Stroms durch das erste Induktionselement und des Stroms durch das zweite Induktionselement über einer Anzahl an Iterationen aufgetragen ist, in einer schematischen Darstellung,

Fig. 17    ein Diagramm des zweiten Beispiels, in welchem eine Spannungsphasenverschiebung über einer Anzahl an Iterationen aufgetragen ist, in einer schematischen Darstellung,

Fig. 18    ein Diagramm des zweiten Beispiels, in welchem ein Verhältnis eines Stroms durch das erste Induktionselement und eines Stroms durch das zweite Induktionselement über einer Anzahl an Iterationen aufgetragen ist, in einer schematischen Darstellung,

Fig. 19    ein Diagramm des zweiten Beispiels, in welchem eine Stromstärke und eine Spannung über einer Zeit zu einem Beginn einer Regelung aufgetragen ist, in einer schematischen Darstellung und

Fig. 20    ein Diagramm des zweiten Beispiels, in welchem eine Stromstärke und eine Spannung über einer Zeit zu einem Ende der Regelung aufgetragen ist, in einer schematischen Darstellung.

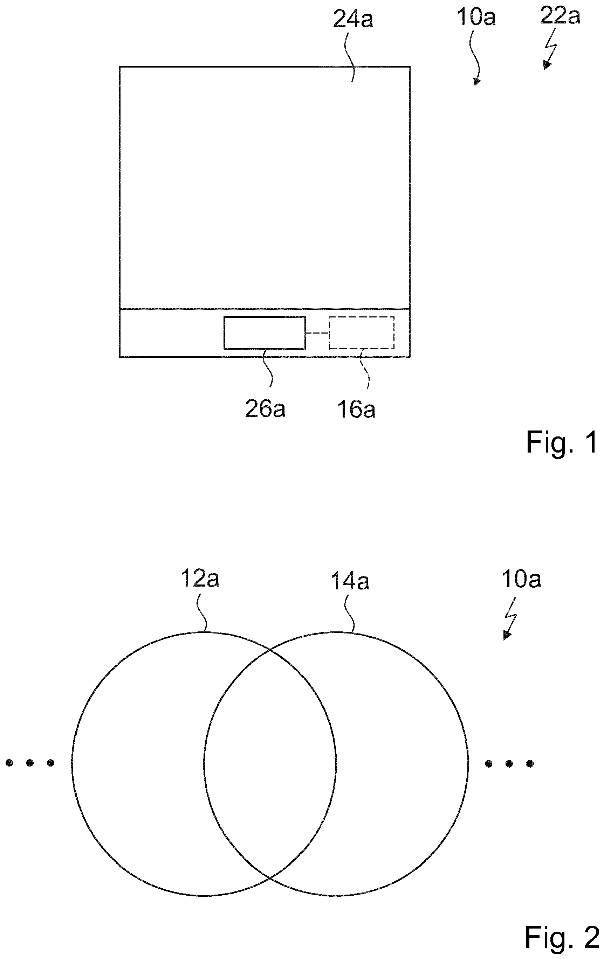

Fig. 1 zeigt ein Induktionsgerät 22a mit einer Induktionsvorrichtung 10a. Das Induktionsgerät 22a ist im vorliegenden Ausführungsbeispiel als ein Induktionsgargerät, und zwar insbesondere als ein Induktionskochfeld, ausgebildet. Die Induktionsvorrichtung 10a ist im vorliegenden Ausführungsbeispiel als eine Induktionsgargerätevorrichtung, und zwar insbesondere als eine Induktionskochfeldvorrichtung, ausgebildet.

Die Induktionsvorrichtung 10a weist eine Geräteplatte 24a auf. In einem Betriebszustand bildet die Geräteplatte 24a einen Teil eines Geräteaußengehäuses, insbesondere des Induktionsgeräts 22a, aus. Die Geräteplatte 24a bildet in einer Einbaulage einen einem Bediener zugewandten Teil des Geräteaußengehäuses aus. Die Geräteplatte 24a könnte beispielsweise als Frontplatte und/oder Deckplatte des Geräteaußengehäuses insbesondere eines als Energieübertragungsgerät und/oder als Induktionsbackofen ausgebildeten Induktionsgeräts ausgebildet sein. Im vorliegenden Ausführungsbeispiel ist die Geräteplatte 24a als eine Kochfeldplatte ausgebildet. In einem montierten Zustand ist die Geräteplatte 24a zu einem Aufstellen von Gargeschirr vorgesehen.

Die Induktionsvorrichtung 10a weist eine Bedienerschnittstelle 26a zu einer Eingabe und/oder Auswahl von Betriebsparametern (vgl. Fig. 1), beispielsweise einer Heizleistung und/oder einer Heizleistungsdichte und/oder einer Heizzone auf. Die Bedienerschnittstelle 26a ist zu einer Ausgabe eines Werts eines Betriebsparameters an einen Bediener vorgesehen. Beispielsweise könnte die Bedienerschnittstelle 26a den Wert des Betriebsparameters an einen Bediener optisch und/oder akustisch ausgeben.

Die Induktionsvorrichtung 10a weist eine Steuereinheit 16a auf. Die Steuereinheit 16a ist dazu vorgesehen, in Abhängigkeit von mittels der Bedienerschnittstelle 26a eingegebenen Betriebsparametern Aktionen auszuführen und/oder Einstellungen zu verändern.

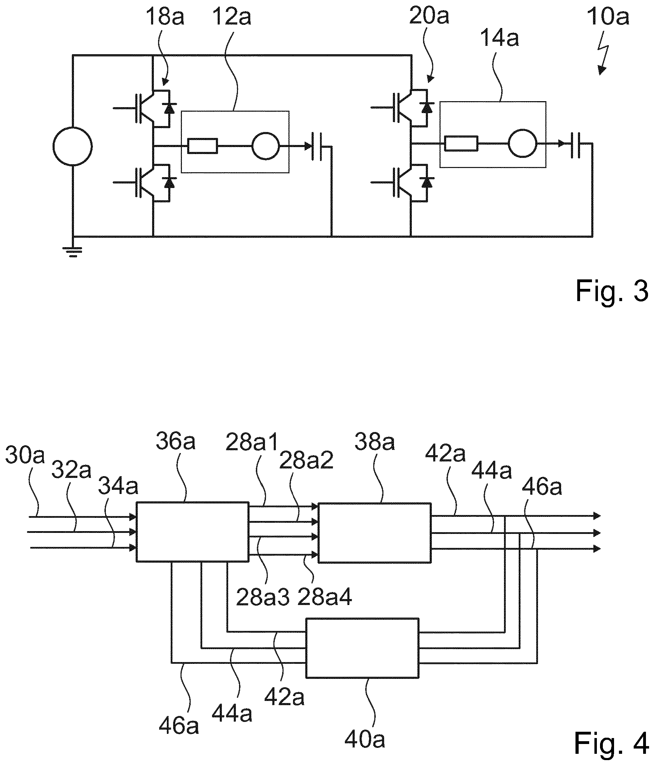

Die Induktionsvorrichtung 10a weist eine Vielzahl an Induktionselementen 12a, 14a auf (vgl. Fig. 2 und 3). Beispielsweise könnte die Induktionsvorrichtung 10a eine Anzahl von mindestens vier, insbesondere von mindestens sechs, vorteilhaft von mindestens acht, besonders vorteilhaft von mindestens zehn, vorzugsweise von mindestens zwölf und besonders bevorzugt eine Vielzahl an Induktionselementen 12a, 14a aufweisen. Beispielsweise könnten die Induktionselemente 12a, 14a in Form einer Matrix und/oder in Form einer Reihe angeordnet sein. Alternativ könnten die Induktionselemente 12a, 14a insbesondere in Form eines klassischen Kochfelds angeordnet sein, wobei insbesondere zumindest zwei und vorteilhaft zumindest drei der Induktionselemente 12a, 14a konzentrisch relativ zueinander angeordnet sein könnten. Im Folgenden werden lediglich zwei der Induktionselemente 12a, 14a beschrieben.

Die Induktionsvorrichtung 10a weist ein erstes Induktionselement 12a und ein zweites Induktionselement 14a auf (vgl. Fig. 2 und 3). Die Induktionselemente 12a, 14a sind im vorliegenden Ausführungsbeispiel als Induktionsheizelemente ausgebildet. In dem Betriebszustand sind die Induktionselemente 12a, 14a auf einer einem Bediener abgewandten Seite der Geräteplatte 24a angeordnet. Die Induktionselemente 12a, 14a sind im Wesentlichen identisch ausgebildet.

Das zweite Induktionselement 14a ist in einem Nahbereich des ersten Induktionselements 12a angeordnet (vgl. Fig. 2). Im vorliegenden Ausführungsbeispiel sind das erste Induktionselement 12a und das zweite Induktionselement 14a bei einer senkrechten Betrachtung auf eine Haupterstreckungsebene des ersten Induktionselements 12a abschnittsweise überlappend angeordnet. Bei einer senkrechten Betrachtung auf eine Haupterstreckungsebene des ersten Induktionselements 12a weisen ein Mittelpunkt des ersten Induktionselements 12a und ein Mittelpunkt des zweiten Induktionselements 14a einen Abstand von im Wesentlichen einer halben maximalen Längserstreckung des ersten Induktionselement 12a und/oder des zweiten Induktionselements 14a auf.

Die Induktionsvorrichtung 10a weist eine erste Frequenzeinheit 18a auf (vgl. Fig. 3). Die erste Frequenzeinheit 18a ist zu einer Energieversorgung des ersten Induktionselements 12a vorgesehen. In jedem Betriebszustand, in welchem das erste Induktionselement 12a aktiviert ist, versorgt die erste Frequenzeinheit 18a das erste Induktionselement 12a mit Energie. Die erste Frequenzeinheit 18a und das erste Induktionselement 12a sind elektrisch leitend miteinander verbunden. Das erste Induktionselement 12a und die erste Frequenzeinheit 18a sind in einer Halbbrückenschaltung angeordnet.

Die Induktionsvorrichtung 10a weist eine zweite Frequenzeinheit 20a auf (vgl. Fig. 3). Die zweite Frequenzeinheit 20a ist zu einer Energieversorgung des zweiten Induktionselements 14a vorgesehen. In jedem Betriebszustand, in welchem das zweite Induktionselement 14a aktiviert ist, versorgt die zweite Frequenzeinheit 20a das zweite Induktionselement 14a mit Energie. Die zweite Frequenzeinheit 20a und das zweite Induktionselement 14a sind elektrisch leitend miteinander verbunden. Das zweite Induktionselement 14a und die zweite Frequenzeinheit 20a sind in einer Halbbrückenschaltung angeordnet.

In dem Betriebszustand betreibt die Steuereinheit 16a die Induktionselemente 12a, 14a zeitgleich. Die Steuereinheit 16a betreibt in dem Betriebszustand das erste Induktionselement 12a mit der ersten Frequenzeinheit 18a. In dem Betriebszustand betreibt die Steuereinheit 16a das zweite Induktionselement 14a mit der zweiten Frequenzeinheit 20a. Die Steuereinheit 16a betreibt in dem Betriebszustand das erste Induktionselement 12a und das zweite Induktionselement 14a mit im Wesentlichen der gleichen Frequenz.

Die Steuereinheit 16a regelt in dem Betriebszustand eine Gesamtleistung der Frequenzeinheiten 18a, 20a auf einen voreingestellten Sollleistungswert 34a. Der voreingestellte Sollleistungswert 34a ist im vorliegenden Ausführungsbeispiel durch eine Bedienereingabe mittels der Bedienerschnittstelle 26a vorgegeben.

In dem Betriebszustand regelt die Steuereinheit 16a ein Verhältnis eines Stroms durch das erste Induktionselement 12a und eines Stroms durch das zweite Induktionselement 14a im Wesentlichen auf einen voreingestellten Stromverhältniswert 30a. Der voreingestellte Stromverhältniswert 30a ist in dem Betriebszustand von zumindest einem Strukturfaktor abhängig.

Im vorliegenden Ausführungsbeispiel ist der Strukturfaktor als ein Geometriefaktor ausgebildet. Der Strukturfaktor weist eine Größe der Induktionselemente 12a, 14a auf. Der Strukturfaktor weist eine Windungszahl der Induktionselemente 12a, 14a auf. Der Strukturfaktor weist eine Ferritanordnung der Induktionselemente 12a, 14a. Der Strukturfaktor weist eine Anordnung der Induktionselemente 12a, 14a relativ zueinander auf. Der Strukturfaktor weist eine Anordnung der Induktionselemente 12a, 14a relativ zu einem Abschirmelement (nicht dargestellt) auf. Der Strukturfaktor weist eine Entfernung der Induktionselemente 12a, 14a zu einem Verbraucher, welcher insbesondere als Gargeschirr ausgebildet ist, auf.

Alternativ oder zusätzlich könnte der Strukturfaktor beispielsweise ein Material des Verbrauchers und/oder eine Größe des Verbrauchers und/oder einen Überlappungsgrad des Verbrauchers mit zumindest einem der Induktionselemente 12a, 14a aufweisen.

$$P = (n*I)^2$$

Unter Annahme, dass die Leistungsdichte des ersten Induktionselements 12a und die Leistungsdichte des zweiten Induktionselements 14a im Wesentlichen gleich sind, leitet sich für das Verhältnis des Stroms durch das erste Induktionselement 12a und des Stroms durch das zweite Induktionselement 14a folgender Zusammenhang ab:

$$I_1 / I_2 = n_2 / n_1 = 1$$

Insbesondere unter Annahme, dass die Induktionselemente 12a, 14a identisch ausgebildet sind, beträgt der voreingestellte Stromverhältniswert 30a im vorliegenden Ausführungsbeispiel im Wesentlichen eins.

In dem Betriebszustand regelt die Steuereinheit 16a eine Phasenverschiebung des Stroms durch das erste Induktionselement 12a und des Stroms durch das zweite Induktionselement 14a im Wesentlichen auf einen voreingestellten Phasenverschiebungswert 32a. Der voreingestellte Phasenverschiebungswert 32a ist von einer Anordnung des ersten Induktionselements 12a relativ zu dem zweiten Induktionselement 14a abhängig. Im vorliegenden Ausführungsbeispiel, in welchem insbesondere das erste Induktionselement 12a und das zweite Induktionselement 14a bei einer senkrechten Betrachtung auf eine Haupterstreckungsebene des ersten Induktionselements 12a abschnittsweise überlappend angeordnet sind, beträgt der voreingestellte Phasenverschiebungswert 32a im Wesentlichen 60°.

Die Steuereinheit 12a passt im vorliegenden Ausführungsbeispiel in dem Betriebszustand zu der Regelung mehrere Betriebskenngrößen 28a der Frequenzeinheiten 18a, 20a an, um insbesondere auf den voreingestellten Stromverhältniswert 30a und/oder auf den voreingestellten Phasenverschiebungswert 32a und/oder auf den voreingestellten Sollleistungswert 34a zu regeln (vgl. Fig. 4).

Die Betriebskenngröße 28a1 weist eine Frequenz der Frequenzeinheiten 18a, 20a, insbesondere der ersten Frequenzeinheit 18a und/oder der zweiten Frequenzeinheit 20a, auf, da die Steuereinheit 16a in dem Betriebszustand insbesondere das erste Induktionselement 12a und das zweite Induktionselement 14a mit im Wesentlichen der gleichen Frequenz betreibt. Die Betriebskenngröße 28a2 weist einen ersten Tastgrad der ersten Frequenzeinheit 18a auf. Die Betriebskenngröße 28a3 weist einen zweiten Tastgrad der zweiten Frequenzeinheit 20a auf. Die Betriebskenngröße 28a4 weist eine Spannungsphasenverschiebung der Frequenzeinheiten 18a, 20a auf.

In einem Verfahren zu einem Betrieb der Induktionsvorrichtung 10a werden die Induktionselemente 12a, 14a in dem Betriebszustand, insbesondere durch die Steuereinheit 16a, zeitgleich betrieben. In dem Betriebszustand wird das Verhältnis des Stroms durch das erste Induktionselement 12a und des Stroms durch das zweite Induktionselement 14a, insbesondere durch die Steuereinheit 16a, im Wesentlichen auf den voreingestellten Stromverhältniswert 30a geregelt.

In einem Regelschritt 36a liest die Steuereinheit 16a in dem Betriebszustand den voreingestellten Stromverhältniswert 30a ein. Die Steuereinheit 16a liest in dem Betriebszustand in dem Regelschritt 36a den voreingestellten Phasenverschiebungswert 32a ein. Die Steuereinheit 16a liest in dem Betriebszustand in dem Regelschritt 36a den voreingestellten Sollleistungswert 34a ein.

In dem Betriebszustand vergleicht die Steuereinheit 16a in dem Regelschritt 36a den voreingestellten Sollleistungswert 34a mit einem aktuellen Sollleistungswert 46a. Die Steuereinheit 16a vergleicht in dem Regelschritt 36a den voreingestellten Phasenverschiebungswert 32a mit einem aktuellen Phasenverschiebungswert 44a. In dem Betriebszustand vergleicht die Steuereinheit 16a in dem Regelschritt 36a den voreingestellten Stromverhältniswert 30a mit einem aktuellen Stromverhältniswert 42a.

Im Fall, dass der aktuelle Sollleistungswert 46a und/oder der aktuelle Phasenverschiebungswert 44a und/oder der aktuelle Stromverhältniswert 42a wenigstens im Wesentlichen und insbesondere genau Null beträgt, da sich insbesondere die Induktionselemente 12a, 14a in einem deaktivierten Zustand befinden, wie beispielsweise zu Beginn eines Betriebszustands vor Aktivierung der Induktionselemente 12a, 14a, legt die Steuereinheit 16a in dem Betriebszustand zumindest einen Startwert und insbesondere zumindest zwei, vorteilhaft zumindest drei, besonders vorteilhaft zumindest vier und vorzugsweise mehrere Startwerte fest. In dem Betriebszustand legt die Steuereinheit 16a den Startwert und/oder die Startwerte in Abhängigkeit von dem Strukturfaktor fest.

In dem Betriebszustand legt die Steuereinheit 16a in dem Regelschritt 36a in Abhängigkeit von dem voreingestellten Stromverhältniswert 30a und/oder von dem voreingestellten Phasenverschiebungswert 32a und/oder von dem voreingestellten Sollleistungswert 34a und/oder von dem Strukturfaktor Betriebskenngrößen 28a fest.

Die Steuereinheit 16a betreibt in dem Betriebszustand in einem Betriebsschritt 38a die Induktionselemente 12a, 14a. In dem Betriebsschritt 38a betreibt die Steuereinheit 16a die Induktionselemente 12a, 14a in dem Betriebszustand mit von der Steuereinheit 16a festgelegten Betriebskenngrößen 28a.

In dem Betriebszustand detektiert die Steuereinheit 16a, insbesondere mittels einer Detektionseinheit (nicht dargestellt), in einem Detektionsschritt 40a einen aktuellen Stromverhältniswert 42a. Die Steuereinheit 16a detektiert in dem Betriebszustand in dem Detektionsschritt 40a, insbesondere mittels der Detektionseinheit, einen aktuellen Phasenverschiebungswert 44a. In dem Betriebszustand detektiert die Steuereinheit 16a, insbesondere mittels der Detektionseinheit, in dem Detektionsschritt 40a einen aktuellen Sollleistungswert 46a.

In dem Betriebszustand kehrt die Steuereinheit 16a, insbesondere im Anschluss an den Detektionsschritt 40a, in den Regelschritt 36a zurück. Die Steuereinheit 16a vergleicht in dem Regelschritt 36a in dem Betriebszustand den voreingestellten Sollleistungswert 34a mit dem aktuellen Sollleistungswert 46a und/oder den voreingestellten Phasenverschiebungswert 32a mit dem aktuellen Phasenverschiebungswert 44a und/oder den voreingestellten Stromverhältniswert 30a mit dem aktuellen Stromverhältniswert 42a.

Die Steuereinheit 16a wiederholt in dem Betriebszustand das beschriebene Verfahren iterativ und insbesondere dauerhaft.

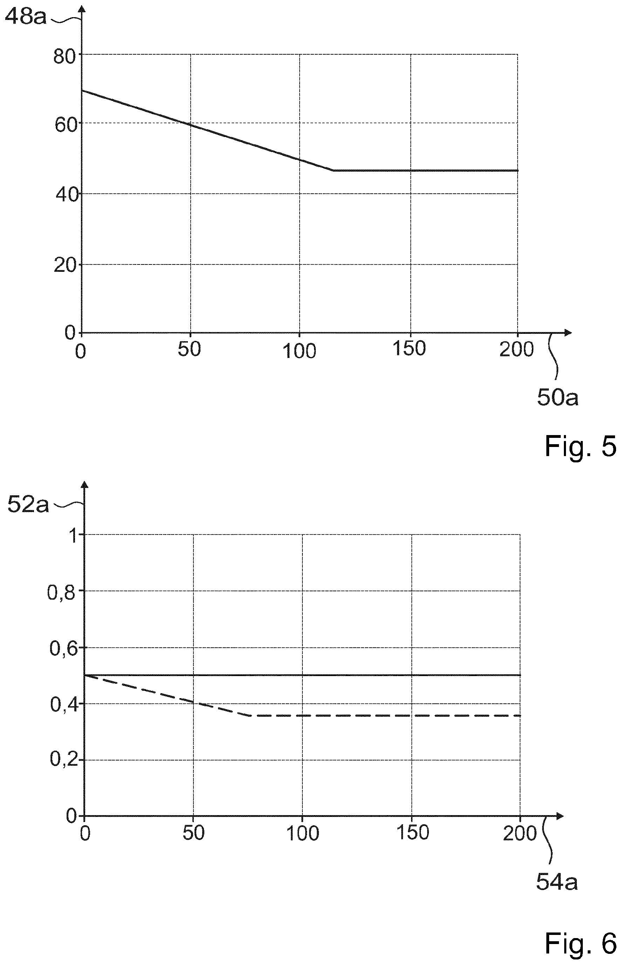

In Fig. 5 bis 12 ist ein erstes Beispiel dargestellt, welches ohne Beschränkung der Allgemeinheit frei gewählt ist. Beispielhaft wird als Startwert für eine Frequenz, mit welcher die Steuereinheit 16a in dem Betriebszustand insbesondere das erste Induktionselement 12a und das zweite Induktionselement 14a betreibt, ein Wert von 70 kHz angenommen. Als Startwert des ersten Tastgrads und des zweiten Tastgrads wird jeweils ein Wert von 0,5 angenommen. Als Startwert einer Spannungsphasenverschiebung der Frequenzeinheiten 18a, 20a wird ein Wert von Null angenommen. Als Startwert einer Leistung wird ein Wert von 1000 W angenommen. Als Startwert des Verhältnisses des Stroms durch das erste Induktionselement 12a und des Stroms durch das zweite Induktionselement 14a wird ein Wert von 1,1 angenommen. Als voreingestellter Sollleistungswert 34a wird ein Wert von 3500 W angenommen.

Fig. 5 zeigt ein Diagramm, in welchem auf einer Ordinatenachse 48a eine Frequenz der ersten Frequenzeinheit 18a und/oder der zweiten Frequenzeinheit 20a aufgetragen ist. Auf einer Abszissenachse 50a ist in Fig. 5 eine Anzahl an Iterationen aufgetragen.

Fig. 6 zeigt ein Diagramm, in welchem auf einer Ordinatenachse 52a ein erster Tastgrad der ersten Frequenzeinheit 18a (gestrichelte Linie) und ein zweiter Tastgrad der zweiten Frequenzeinheit 20a (durchgezogene Linie) aufgetragen ist. Auf einer Abszissenachse 54a ist in Fig. 6 eine Anzahl an Iterationen aufgetragen.

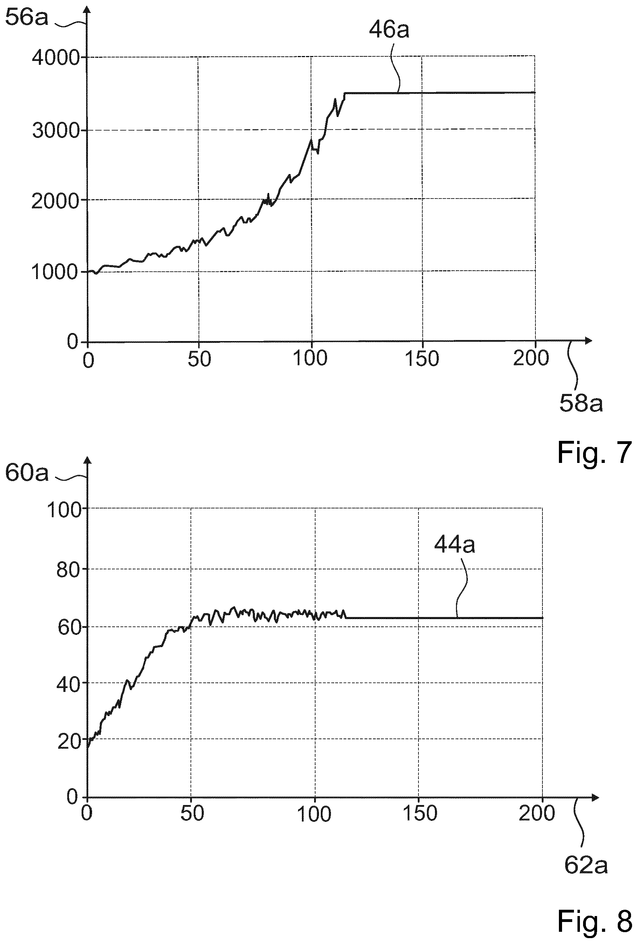

Fig. 7 zeigt ein Diagramm, in welchem auf einer Ordinatenachse 56a eine Leistung aufgetragen ist. Auf einer Abszissenachse 58a ist in Fig. 7 eine Anzahl an Iterationen aufgetragen. Eine dargestellte Linie entspricht dem detektierten aktuellen Sollleistungswert 46a.

Fig. 8 zeigt ein Diagramm, in welchem auf einer Ordinatenachse 60a die Phasenverschiebung des Stroms durch das erste Induktionselement 12a und des Stroms durch das zweite Induktionselement 14a aufgetragen ist. Auf einer Abszissenachse 62a ist in Fig. 8 eine Anzahl an Iterationen aufgetragen. Eine dargestellte Linie entspricht dem detektierten aktuellen Phasenverschiebungswert 44a.

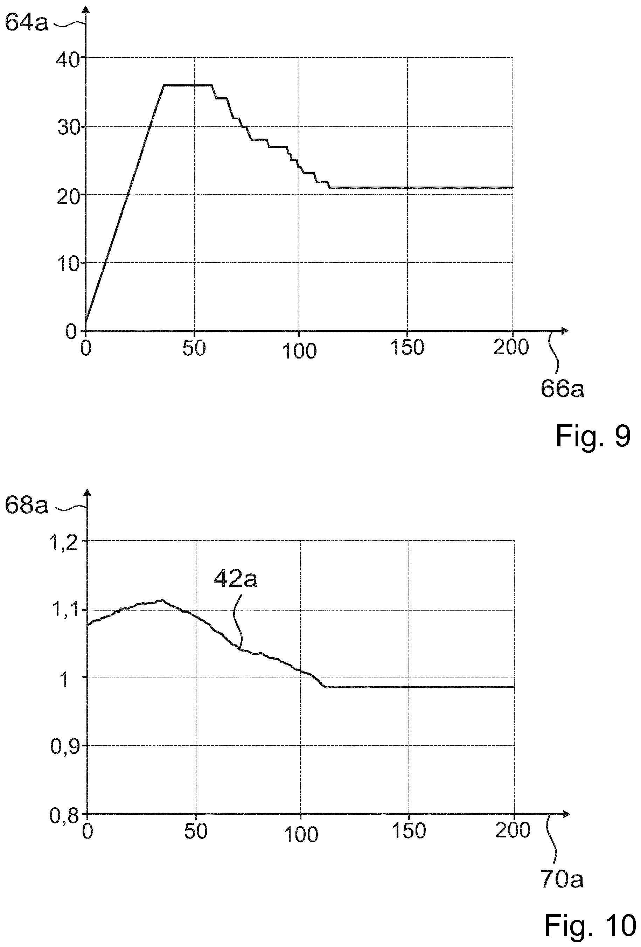

Fig. 9 zeigt ein Diagramm, in welchem auf einer Ordinatenachse 64a eine Spannungsphasenverschiebung der Frequenzeinheiten 18a, 20a aufgetragen ist. Auf einer Abszissenachse 66a ist in Fig. 9 eine Anzahl an Iterationen aufgetragen.

Fig. 10 zeigt ein Diagramm, in welchem auf einer Ordinatenachse 68a das Verhältnis des Stroms durch das erste Induktionselement 12a und des Stroms durch das zweite Induktionselement 14a aufgetragen ist. Auf einer Abszissenachse 70a ist in Fig. 10 eine Anzahl an Iterationen aufgetragen. Eine dargestellte Linie entspricht dem detektierten aktuellen Stromverhältniswert 42a.

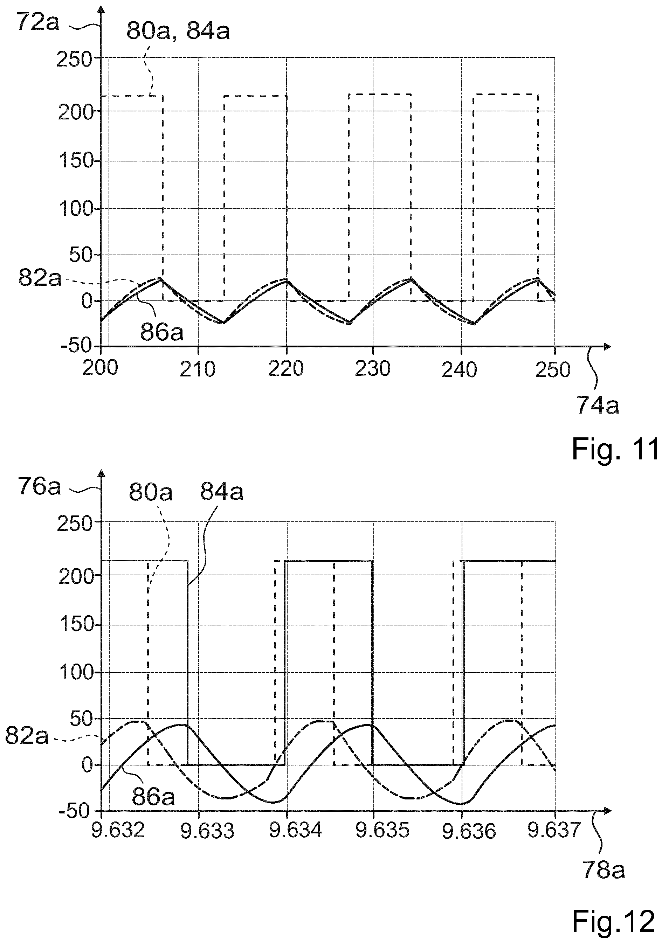

Fig. 11 zeigt ein Diagramm, in welchem auf einer Ordinatenachse 72a eine Stromstärke der Frequenzeinheiten 18a, 20a und eine Spannung der Frequenzeinheiten 18a, 20a aufgetragen ist, und zwar insbesondere zu einem Beginn der Regelung und beispielsweise nach maximal 25 Iterationen. Auf einer Abszissenachse 74a ist in Fig. 11 eine Zeit aufgetragen. Ein Spannungsverlauf 80a der ersten Frequenzeinheit 18a ist gestrichelt dargestellt. Ein Stromverlauf 82a der ersten Frequenzeinheit 18a ist gestrichelt dargestellt. Ein Spannungsverlauf 84a der zweiten Frequenzeinheit 20a entspricht dem Spannungsverlauf 80a der ersten Frequenzeinheit 18a. Ein Stromverlauf 86a der zweiten Frequenzeinheit 20a ist durchgezogen dargestellt.

Fig. 12 zeigt ein Diagramm, in welchem auf einer Ordinatenachse 76a eine Stromstärke der Frequenzeinheiten 18a, 20a und eine Spannung der Frequenzeinheiten 18a, 20a aufgetragen ist, und zwar insbesondere zu einem Ende der Regelung und beispielsweise nach mindestens 175 Iterationen. Auf einer Abszissenachse 78a ist in Fig. 12 eine Zeit aufgetragen. Ein Spannungsverlauf 80a der ersten Frequenzeinheit 18a ist gestrichelt dargestellt. Ein Stromverlauf 82a der ersten Frequenzeinheit 18a ist gestrichelt dargestellt. Ein Spannungsverlauf 84a der zweiten Frequenzeinheit 20a ist durchgezogen dargestellt. Ein Stromverlauf 86a der zweiten Frequenzeinheit 20a ist durchgezogen dargestellt.

Aus Fig. 5 bis 12 kann entnommen werden, dass die Steuereinheit 16a die Regelung iterativ vornimmt. Nach einer Anzahl von im Wesentlichen 200 Iterationen hat die Steuereinheit 16a in dem Betriebszustand den aktuellen Stromverhältniswert 42a im Wesentlichen auf den voreingestellten Stromverhältniswert 30a geregelt. In dem Betriebszustand hat die Steuereinheit 16a nach einer Anzahl von im Wesentlichen 200 Iterationen den aktuellen Phasenverschiebungswert 44a im Wesentlichen auf den voreingestellten Phasenverschiebungswert 32a geregelt. Nach einer Anzahl von im Wesentlichen 200 Iterationen hat die Steuereinheit 16a in dem Betriebszustand den aktuellen Sollleistungswert 46a im Wesentlichen auf den voreingestellten Sollleistungswert 34a geregelt.

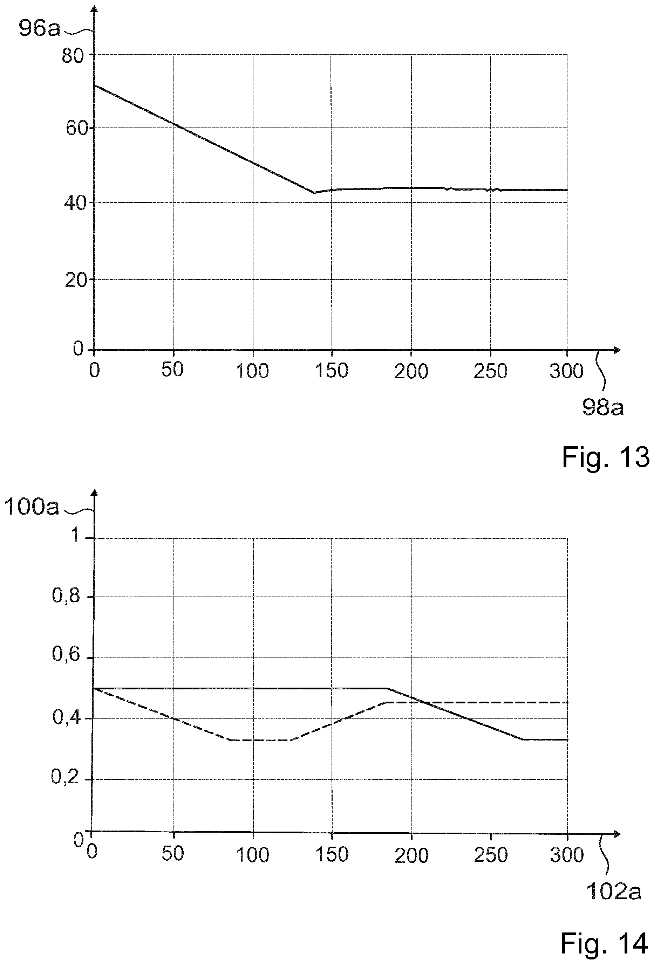

In Fig. 13 bis 20 ist ein zweites Beispiel dargestellt, welches ohne Beschränkung der Allgemeinheit frei gewählt ist. Beispielhaft wird als Startwert für eine Frequenz, mit welcher die Steuereinheit 16a in dem Betriebszustand insbesondere das erste Induktionselement 12a und das zweite Induktionselement 14a betreibt, ein Wert von 70 kHz angenommen. Als Startwert des ersten Tastgrads und des zweiten Tastgrads wird jeweils ein Wert von 0,5 angenommen. Als Startwert einer Spannungsphasenverschiebung der Frequenzeinheiten 18a, 20a wird ein Wert von Null angenommen. Als Startwert des Verhältnisses des Stroms durch das erste Induktionselement 12a und des Stroms durch das zweite Induktionselement 14a wird ein Wert von 1,1 angenommen. Als voreingestellter Sollleistungswert 34a wird ein Wert von 6000 W angenommen.

Fig. 13 zeigt ein Diagramm, in welchem auf einer Ordinatenachse 96a eine Frequenz der ersten Frequenzeinheit 18a und/oder der zweiten Frequenzeinheit 20a aufgetragen ist. Auf einer Abszissenachse 98a ist in Fig. 13 eine Anzahl an Iterationen aufgetragen.

Fig. 14 zeigt ein Diagramm, in welchem auf einer Ordinatenachse 100a ein erster Tastgrad der ersten Frequenzeinheit 18a (gestrichelte Linie) und ein zweiter Tastgrad der zweiten Frequenzeinheit 20a (durchgezogene Linie) aufgetragen ist. Auf einer Abszissenachse 102a ist in Fig. 14 eine Anzahl an Iterationen aufgetragen.

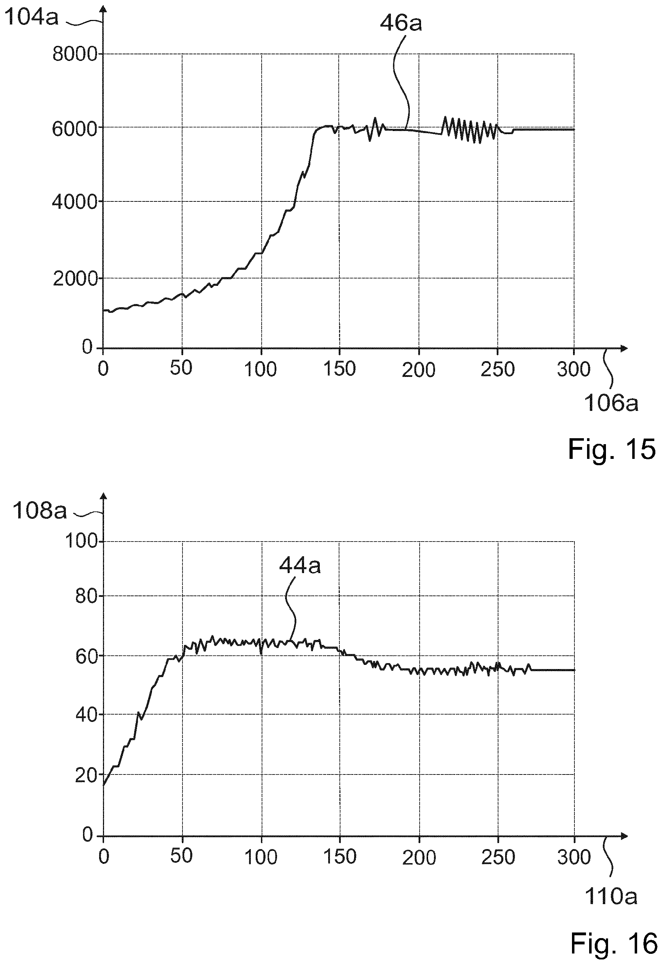

Fig. 15 zeigt ein Diagramm, in welchem auf einer Ordinatenachse 104a eine Leistung aufgetragen ist. Auf einer Abszissenachse 106a ist in Fig. 15 eine Anzahl an Iterationen aufgetragen. Eine dargestellte Linie entspricht dem detektierten aktuellen Sollleistungswert 46a.

Fig. 16 zeigt ein Diagramm, in welchem auf einer Ordinatenachse 108a die Phasenverschiebung des Stroms durch das erste Induktionselement 12a und des Stroms durch das zweite Induktionselement 14a aufgetragen ist. Auf einer Abszissenachse 110a ist in Fig. 16 eine Anzahl an Iterationen aufgetragen. Eine dargestellte Linie entspricht dem detektierten aktuellen Phasenverschiebungswert 44a.

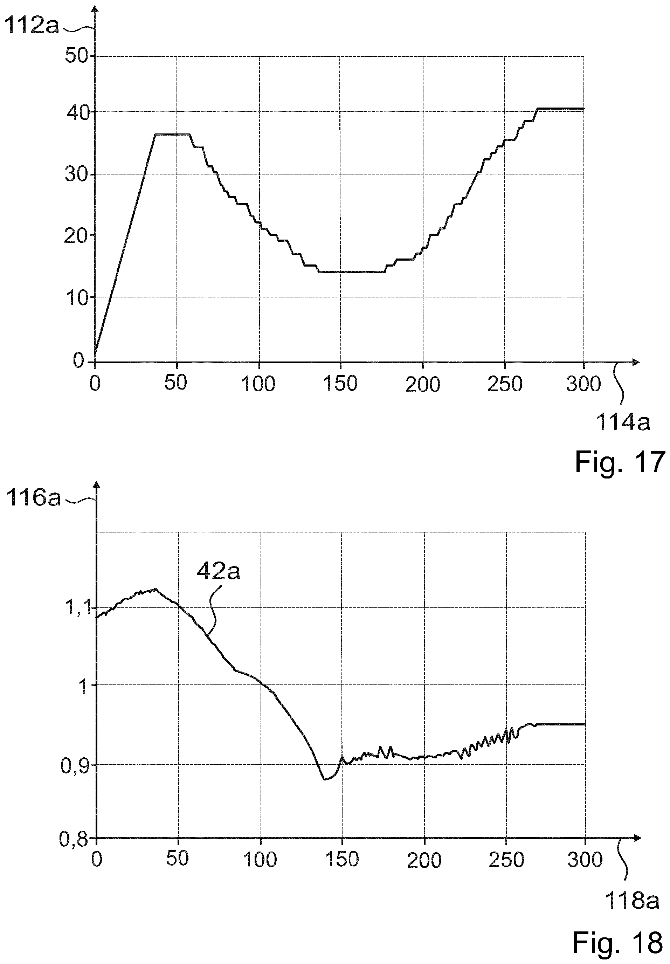

Fig. 17 zeigt ein Diagramm, in welchem auf einer Ordinatenachse 112a eine Spannungsphasenverschiebung der Frequenzeinheiten 18a, 20a aufgetragen ist. Auf einer Abszissenachse 114a ist in Fig. 17 eine Anzahl an Iterationen aufgetragen.

Fig. 18 zeigt ein Diagramm, in welchem auf einer Ordinatenachse 116a das Verhältnis des Stroms durch das erste Induktionselement 12a und des Stroms durch das zweite Induktionselement 14a aufgetragen ist. Auf einer Abszissenachse 118a ist in Fig. 18 eine Anzahl an Iterationen aufgetragen. Eine dargestellte Linie entspricht dem detektierten aktuellen Stromverhältniswert 42a.

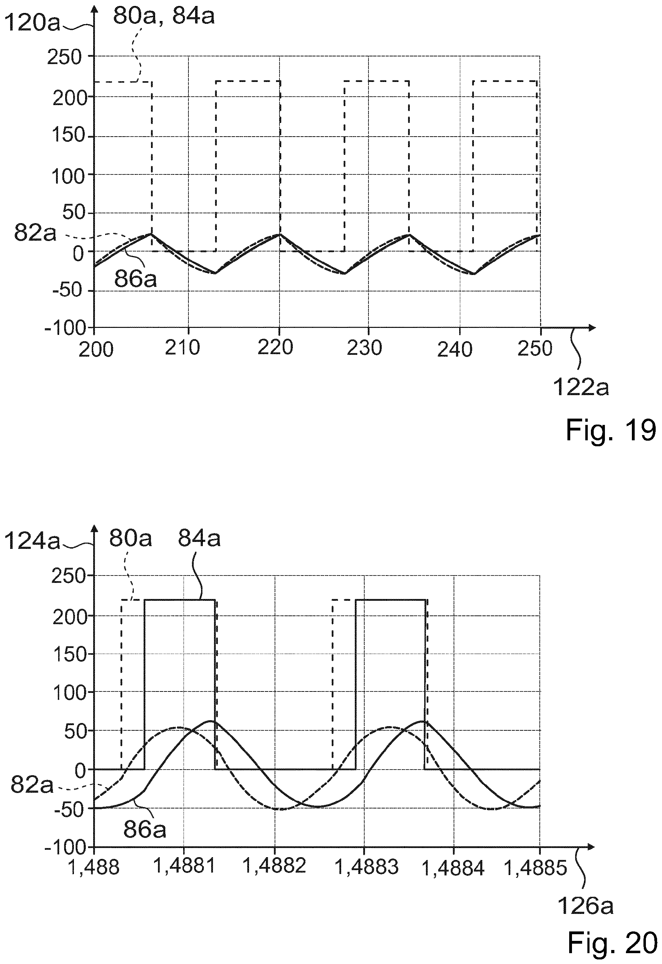

Fig. 19 zeigt ein Diagramm, in welchem auf einer Ordinatenachse 120a eine Stromstärke der Frequenzeinheiten 18a, 20a und eine Spannung der Frequenzeinheiten 18a, 20a aufgetragen ist, und zwar insbesondere zu einem Beginn der Regelung und beispielsweise nach maximal 25 Iterationen. Auf einer Abszissenachse 122a ist in Fig. 19 eine Zeit aufgetragen. Ein Spannungsverlauf 80a der ersten Frequenzeinheit 18a ist gestrichelt dargestellt. Ein Stromverlauf 82a der ersten Frequenzeinheit 18a ist gestrichelt dargestellt. Ein Spannungsverlauf 84a der zweiten Frequenzeinheit 20a entspricht dem Spannungsverlauf 80a der ersten Frequenzeinheit 18a. Ein Stromverlauf 86a der zweiten Frequenzeinheit 20a ist durchgezogen dargestellt.

Fig. 20 zeigt ein Diagramm, in welchem auf einer Ordinatenachse 124a eine Stromstärke der Frequenzeinheiten 18a, 20a und eine Spannung der Frequenzeinheiten 18a, 20a aufgetragen ist, und zwar insbesondere zu einem Ende der Regelung und beispielsweise nach mindestens 275 Iterationen. Auf einer Abszissenachse 126a ist in Fig. 20 eine Zeit aufgetragen. Ein Spannungsverlauf 80a der ersten Frequenzeinheit 18a ist gestrichelt dargestellt. Ein Stromverlauf 82a der ersten Frequenzeinheit 18a ist gestrichelt dargestellt. Ein Spannungsverlauf 84a der zweiten Frequenzeinheit 20a ist durchgezogen dargestellt. Ein Stromverlauf 86a der zweiten Frequenzeinheit 20a ist durchgezogen dargestellt.

Aus Fig. 13 bis 20 kann entnommen werden, dass die Steuereinheit 16a die Regelung iterativ vornimmt. Nach einer Anzahl von im Wesentlichen 300 Iterationen hat die Steuereinheit 16a in dem Betriebszustand den aktuellen Stromverhältniswert 42a im Wesentlichen auf den voreingestellten Stromverhältniswert 30a geregelt. In dem Betriebszustand hat die Steuereinheit 16a nach einer Anzahl von im Wesentlichen 300 Iterationen den aktuellen Phasenverschiebungswert 44a im Wesentlichen auf den voreingestellten Phasenverschiebungswert 32a geregelt. Nach einer Anzahl von im Wesentlichen 300 Iterationen hat die Steuereinheit 16a in dem Betriebszustand den aktuellen Sollleistungswert 46a im Wesentlichen auf den voreingestellten Sollleistungswert 34a geregelt.

**Bezugszeichen**

| | |
|---|---|
| 10 | Induktionsvorrichtung |
| 12 | Erstes Induktionselement |
| 14 | Zweites Induktionselement |
| 16 | Steuereinheit |
| 18 | Erste Frequenzeinheit |
| 20 | Zweite Frequenzeinheit |
| 22 | Induktionsgerät |
| 24 | Geräteplatte |
| 26 | Bedienerschnittstelle |
| 28 | Betriebskenngröße |
| 30 | Stromverhältniswert |
| 32 | Phasenverschiebungswert |
| 34 | Sollleistungswert |
| 36 | Regelschritt |
| 38 | Betriebsschritt |
| 40 | Detektionsschritt |
| 42 | Stromverhältniswert |
| 44 | Phasenverschiebungswert |
| 46 | Sollleistungswert |
| 48 | Ordinatenachse |
| 50 | Abszissenachse |
| 52 | Ordinatenachse |
| 54 | Abszissenachse |
| 56 | Ordinatenachse |
| 58 | Abszissenachse |
| 60 | Ordinatenachse |
| 62 | Abszissenachse |
| 64 | Ordinatenachse |
| 66 | Abszissenachse |
| 68 | Ordinatenachse |
| 70 | Abszissenachse |
| 72 | Ordinatenachse |
| 74 | Abszissenachse |
| 76 | Ordinatenachse |
| 78 | Abszissenachse |
| 80 | Spannungsverlauf |
| 82 | Stromverlauf |
| 84 | Spannungsverlauf |
| 86 | Stromverlauf |
| 96 | Ordinatenachse |
| 98 | Abszissenachse |
| 100 | Ordinatenachse |
| 102 | Abszissenachse |
| 104 | Ordinatenachse |
| 106 | Abszissenachse |
| 108 | Ordinatenachse |
| 110 | Abszissenachse |
| 112 | Ordinatenachse |
| 114 | Abszissenachse |
| 116 | Ordinatenachse |
| 118 | Abszissenachse |
| 120 | Ordinatenachse |
| 122 | Abszissenachse |
| 124 | Ordinatenachse |
| 126 | Abszissenachse |

**Patentansprüche**

1. Induktionsvorrichtung mit zumindest einem ersten Induktionselement (12a), mit zumindest einem zweiten Induktionselement (14a), welches in einem Nahbereich des ersten Induktionselements (12a) angeordnet ist, wobei bei einer senkrechten Betrachtung auf eine Haupterstreckungsebene des ersten Induktionselements (12a) und/oder des zweiten Induktionselements (14a) ein Abstand einer seitlichen Begrenzung des ersten Induktionselements (12a) zu einer nächstgelegenen seitlichen Begrenzung des zweiten Induktionselements (14a) maximal 60 % einer Längserstreckung des ersten Induktionselements (12a) und/oder des zweiten Induktionselements (14a) beträgt und welches in wenigstens einem Betriebszustand mit dem ersten Induktionselement (12a) koppelt, und mit zumindest einer Steuereinheit (16a), welche die Induktionselemente (12a, 14a) in dem Betriebszustand zeitgleich betreibt, **dadurch gekennzeichnet, dass** die Steuereinheit (16a) in dem Betriebszustand zu einem Erreichen einer optimierten Energieübertragung und einer Minimierung eines Einflusses einer Kopplung der Induktionselemente (12a, 14a) ein Verhältnis eines Stroms durch das erste Induktionselement (12a) und eines Stroms durch das zweite Induktionselement (14a) wenigstens im Wesentlichen auf einen voreingestellten Stromverhältniswert (30a) regelt, wobei eine Abweichung des Verhältnisses von dem voreingestellten Stromverhältniswert (30a) weniger als 25 % des voreingestellten Stromverhältniswerts (30a) entspricht, wobei die Steuereinheit (16a) den voreingestellten Stromverhältniswert (30a) in Abhängigkeit von zumindest einem Strukturfaktor, welcher eine Anordnung der Induktionselemente (12a, 14a) relativ zueinander und/oder eine Anordnung zumindest eines der Induktionselemente (12a, 14a) relativ zu zumindest einem Verbraucher und/oder eine Anordnung zumindest eines der Induktionselemente (12a, 14a) relativ zu zumindest einem Abschirmelement und/oder zumindest eine Eigenschaft von zumindest einem Verbraucher und/oder zumindest eine Eigenschaft zumindest eines der Induktionselemente (12a, 14a) aufweisen kann, festlegt und/oder ermittelt.

2. Induktionsvorrichtung nach einem der vorhergehenden Ansprüche, **dadurch gekennzeichnet, dass** der voreingestellte Stromverhältniswert (30a) durch ein Verhältnis einer Windungszahl des zweiten Induktionselements (14a) und einer Windungszahl des ersten Induktionselements (12a) definiert ist.

3. Induktionsvorrichtung nach einem der vorhergehenden Ansprüche, **dadurch gekennzeichnet, dass** der voreingestellte Stromverhältniswert (30a) wenigstens im Wesentlichen eins beträgt.

4. Induktionsvorrichtung nach einem der vorhergehenden Ansprüche, **dadurch gekennzeichnet, dass** die Steuereinheit (16a) in dem Betriebszustand eine Phasenverschiebung des Stroms durch das erste Induktionselement (12a) und des Stroms durch das zweite Induktionselement (14a) wenigstens im Wesentlichen auf einen voreingestellten Phasenverschiebungswert (32a) regelt.

5. Induktionsvorrichtung nach Anspruch 4, **dadurch gekennzeichnet, dass** der voreingestellte Phasenverschiebungswert (32a) von einer Anordnung des ersten Induktionselements (12a) relativ zu dem zweiten Induktionselement (14a) abhängig ist.

6. Induktionsvorrichtung nach einem der vorhergehenden Ansprüche, **gekennzeichnet durch** zumindest eine erste Frequenzeinheit (18a), welche zu einer Energieversorgung des ersten Induktionselements (12a) vorgesehen ist, und zumindest eine zweite Frequenzeinheit (20a), welche zu einer Energieversorgung des zweiten Induktionselements (14a) vorgesehen ist.

7. Induktionsvorrichtung nach Anspruch 6, **dadurch gekennzeichnet, dass** die Steuereinheit (16a) in dem Betriebszustand zu der Regelung zumindest eine Betriebskenngröße zumindest einer der Frequenzeinheiten (18a, 20a) anpasst.

8. Induktionsvorrichtung nach einem der vorhergehenden Ansprüche, **dadurch gekennzeichnet, dass** die Steuereinheit (16a) in dem Betriebszustand das erste Induktionselement (12a) und das zweite Induktionselement (14a) mit wenigstens im Wesentlichen der gleichen Frequenz betreibt.

9. Induktionsvorrichtung nach einem der vorhergehenden Ansprüche, **dadurch gekennzeichnet, dass** das erste Induktionselement (12a) und das zweite Induktionselement (14a) bei einer senkrechten Betrachtung auf eine Haupterstreckungsebene des ersten Induktionselements (12a) wenigstens abschnittsweise überlappend angeordnet sind.

10. Induktionsgerät, insbesondere Induktionsgargerät, mit zumindest einer Induktionsvorrichtung (10a) nach einem der vorhergehenden Ansprüche.

11. Verfahren zu einem Betrieb einer Induktionsvorrichtung (10a) nach einem der Ansprüche 1 bis 9, mit zumindest einem ersten Induktionselement (12a) und mit zumindest einem zweiten Induktionselement (14a), welches in einem Nahbereich des ersten Induktionselements (12a) angeordnet ist, wobei die Induktionselemente (12a, 14a) in wenigstens einem Betriebszustand zeitgleich betrieben werden, **dadurch gekennzeichnet, dass** in dem Betriebszustand ein Verhältnis eines Stroms durch das erste Induktionselement (12a) und eines Stroms durch das zweite Induktionselement (14a) wenigstens im Wesentlichen auf einen voreingestellten Stromverhältniswert (30a) geregelt wird.

**Claims**

1. Induction apparatus with at least one first induction element (12a), with at least one second induction element (14a), which is arranged in a region near the first induction element (12a), wherein, in a perpendicular view of a main extension plane of the first induction element (12a) and/or the second induction element (14a), a distance between a lateral limit of the first induction element (12a) and a nearest lateral limit of the second induction element (14a) amounts to a maximum of 60% of a longitudinal extension of the first induction element (12a) and/or the second induction element (14a) and which couples to the first induction element (12a) in at least one operating state, and with at least one control unit (16a), which operates the induction elements (12a, 14a) simultaneously in the operating state, **characterised in that** the control unit (16a), in the operating state, in order to achieve an optimised energy transfer and a minimisation of an influence of a coupling of the induction elements (12a, 14a), regulates a ratio of a current through the first induction element (12a) and a current through the second induction element (14a) at least substantially to a preset current ratio value (30a), wherein a deviation of the ratio from the preset current ratio value (30a) corresponds to less than 25% of the preset current ratio value (30), wherein the control unit (16a) specifies and/or ascertains the preset current ratio value (30a) as a function of at least one structure factor, which may have an arrangement of the induction elements (12a, 14a) relative to one another and/or an arrangement of at least one of the induction elements (12a, 14a) relative to at least one consumer and/or an arrangement of at least one of the induction elements (12a, 14a) relative to at least one shielding element and/or at least one property of at least one consumer and/or at least one property of at least one of the induction elements (12a, 14a).

2. Induction apparatus according to one of the preceding claims, **characterised in that** the preset current ratio value (30a) is defined by a ratio of a winding count of the second induction element (14a) and a winding count of the first induction element (12a).

3. Induction apparatus according to one of the preceding claims, **characterised in that** the preset current ratio value (30a) at least substantially amounts to one.

4. Induction apparatus according to one of the preceding claims, **characterised in that** the control unit (16a), in the operating state, regulates a phase shift of the current through the first induction element (12a) and the current through the second induction element (14a) at least substantially to a preset phase shift value (32a).

5. Induction apparatus according to claim 4, **characterised in that** the preset phase shift value (32a) is dependent upon an arrangement of the first induction element (12a) relative to the second induction element (14a).

6. Induction apparatus according to one of the preceding claims, **characterised by** at least one first frequency unit (18a), which is provided to supply energy to the first induction element (12a), and at least one second frequency unit (20a), which is provided to supply energy to the second induction element (14a).

7. Induction apparatus according to claim 6, **characterised in that** the control unit (16a), in the operating state, adapts at least one operating characteristic variable of at least one of the frequency units (18a, 20a) for the regulation.

8. Induction apparatus according to one of the preceding claims, **characterised in that** the control unit (16a), in the operating state, operates the first induction element (12a) and the second induction element (14a) with at least substantially the same frequency.

9. Induction apparatus according to one of the preceding claims, **characterised in that** the first induction element (12a) and the second induction element (14a), in a perpendicular view of a main extension plane of the first induction element (12a), are arranged such that they overlap at least in sections.

10. Induction appliance, in particular induction cooking appliance, with at least one induction apparatus (10a) according to one of the preceding claims.

11. Method for operation of an induction apparatus (10a) according to one of claims 1 to 9, with at least one first induction element (12a) and with at least one second induction element (14a), which is arranged in a region near the first induction element (12a), wherein the induction elements (12a, 14a) are operated simultaneously in at least one operating state, **characterised in that,** in the operating state, a ratio of a current through the first induction element (12a) and a current through the second induction element (14a) is regulated at least substantially to a preset current ratio value (30a).

**Revendications**

1. Dispositif d'induction avec au moins un premier élément d'induction (12a), avec au moins un deuxième élément d'induction (14a), lequel est disposé dans une zone proche du premier élément d'induction (12a), dans lequel lors d'une observation perpendiculaire sur un plan d'extension principal du premier élément d'induction (12a) et/ou du deuxième élément d'induction (14a), une distance d'une délimitation latérale du premier élément d'induction (12a) à une délimitation latérale la plus proche du deuxième élément d'induction (14a) s'élève au maximum à 60 % d'une extension longitudinale du premier élément d'induction (12a) et/ou du deuxième élément d'induction (14a) et lequel, dans au moins un état de fonctionnement, se couple au premier élément d'induction (12a), et avec au moins une unité de commande (16a), laquelle fait fonctionner simultanément les éléments d'induction (12a, 14a) dans l'état de fonctionnement, **caractérisé en ce que** l'unité de commande (16a), dans l'état de fonctionnement, règle un rapport d'un courant à travers le premier élément d'induction (12a) et d'un courant à travers le deuxième élément d'induction (14a) au moins sensiblement à une valeur de rapport de courant préétablie (30a) jusqu'à l'obtention d'un transfert d'énergie optimisé et d'une minimisation d'une influence d'un couplage des éléments d'induction (12a, 14a), dans lequel une déviation du rapport de la valeur de rapport de courant préétablie (30a) correspond à moins de 25 % de la valeur de rapport de courant préétablie (30a), dans lequel l'unité de commande (16a) fixe et/ou détermine la valeur de rapport de courant préétablie (30a) en fonction d'au moins un facteur structural, lequel peut comprendre un agencement des éléments d'induction (12a, 14a) l'un par rapport à l'autre et/ou un agencement d'au moins l'un des éléments d'induction (12a, 14a) par rapport à au moins un consommateur et/ou un agencement d'au moins l'un des éléments d'induction (12a, 14a) par rapport à au moins un élément de blindage et/ou au moins une propriété d'au moins un consommateur et/ou au moins une propriété d'au moins l'un des éléments d'induction (12a, 14a).

2. Dispositif d'induction selon l'une des revendications précédentes, **caractérisé en ce que** la valeur de rapport de courant préétablie (30a) est définie par un rapport d'un nombre de spires du deuxième élément d'induction (14a) et d'un nombre de spires du premier élément d'induction (12a).

3. Dispositif d'induction selon l'une des revendications précédentes, **caractérisé en ce que** la valeur de rapport de courant préétablie (30a) s'élève à au moins sensiblement un.

4. Dispositif d'induction selon l'une des revendications précédentes, **caractérisé en ce que** l'unité de commande (16a), dans l'état de fonctionnement, règle un décalage de phase du courant à travers le premier élément d'induction (12a) et du courant à travers le deuxième élément d'induction (14a) au moins sensiblement à une valeur de décalage de phase préétablie (32a).

5. Dispositif d'induction selon la revendication 4, **caractérisé en ce que** la valeur de décalage de phase préétablie (32a) dépend d'un agencement du premier élément d'induction (12a) par rapport au deuxième élément d'induction (14a).

6. Dispositif d'induction selon l'une des revendications précédentes, **caractérisé par** au moins une première unité de fréquence (18a), laquelle est prévue pour une alimentation en énergie du premier élément d'induction (12a), et au moins une deuxième unité de fréquence (20a), laquelle est prévue pour une alimentation en énergie du deuxième élément d'induction (14a).

7. Dispositif d'induction selon la revendication 6, **caractérisé en ce que** l'unité de commande (16a), dans l'état de fonctionnement, s'adapte au réglage d'au moins une grandeur caractéristique de fonctionnement d'au moins l'une des unités de fréquence (18a, 20a).

8. Dispositif d'induction selon l'une des revendications précédentes, **caractérisé en ce que** l'unité de commande (16a), dans l'état de fonctionnement, fait fonctionner le premier élément d'induction (12a) et le deuxième élément d'induction (14a) avec au moins sensiblement la même fréquence.

9. Dispositif d'induction selon l'une des revendications précédentes, **caractérisé en ce que** le premier élément d'induction (12a) et le deuxième élément d'induction (14a), lors d'une observation perpendiculaire sur un plan d'extension principal du premier élément d'induction (12a), sont disposés au moins par endroits en chevauchement.

10. Appareil à induction, en particulier appareil de cuisson à induction, avec au moins un dispositif d'induction (10a) selon l'une des revendications précédentes.

11. Procédé servant à faire fonctionner un dispositif d'induction (10a) selon l'une des revendications 1 à 9, avec au moins un premier élément d'induction (12a) et avec au moins un deuxième élément d'induction (14a), lequel est disposé dans une zone proche du premier élément d'induction (12a), dans lequel les éléments d'induction (12a, 14a) sont mis simultanément en fonctionnement dans au moins un état de fonctionnement, **caractérisé en ce que**, dans l'état de fonctionnement, un rapport d'un courant à travers le premier élément d'induction (12a) et d'un courant à travers le deuxième élément d'induction (14a) est réglé au moins sensiblement à une valeur de rapport de courant préétablie (30a).

24a    10a    22a

26a    16a

Fig. 1

12a    14a    10a

Fig. 2

Fig. 3

Fig. 4

Fig. 5

Fig. 6

56a

46a

4000

3000

2000

1000

0

0          50          100          150          200

58a

Fig. 7

60a

44a

100

80

60

40

20

0

0          50          100          150          200

62a

Fig. 8

Fig. 9

Fig. 10

Fig. 11

Fig.12

Fig. 13

Fig. 14

Fig. 15

Fig. 16

Fig. 17

Fig. 18

Fig. 19

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017109609 A1
- EP 2731403 A1